# EUROPÄISCHE PATENTSCHRIFT

(11) **EP 0 626 001 B1**
(45) Veröffentlichungstag und Bekanntmachung des Hinweises auf die Patenterteilung: **01.05.1996**
(21) Anmeldenummer: 93917383.7
(22) Anmeldetag: 03.02.1993
(51) Int. Cl.: C08G 59/18, C08G 59/62, C09D 163/00, C09D 5/03

(54) **PULVERLACK UND DESSEN VERWENDUNG ZUR INNENBESCHICHTUNG VON VERPACKUNGSBEHÄLTERN**
POWDERED LACQUER AND ITS USE AS AN INTERNAL COATING IN PACKAGING CONTAINERS
VERNIS EN POUDRE ET SON UTILISATION POUR L'ENDUCTION INTERIEURE DE RECIPIENTS D'EMBALLAGE

(30) Priorität: 13.02.1992 DE 4204266
(43) Veröffentlichungstag der Anmeldung: 30.11.1994
(73) Patentinhaber: BASF Lacke + Farben AG, D-48165 Münster-Hiltrup (DE)
(72) Erfinder: RADEMACHER, Josef, D-4400 Münster (DE); REITER, Udo, D-4404 Telgte (DE); LESSMEISTER, Peter, D-4400 Münster (DE)
(86) Internationale Anmeldenummer: EP9300243
(87) Internationale Veröffentlichungsnummer: WO9316141

(56) Entgegenhaltungen:
- EP-A- 0 119 164
- WO-A-87/02043
- GB-A- 2 055 843
- US-A- 4 251 426

## Beschreibung

Gegenstand der vorliegenden Erfindung sind Pulverlacke, insbesondere für die Innenbeschichtung von Verpackungsbehältern, auf der Basis von Epoxidharzen und phenolischen Härtern, die
A) mindestens ein Epoxidharz mit einem Epoxidäquivalentgewicht von 300 bis 5500 und
B) mindestens einen Härter mit mehr als einer phenolischen Hydroxylgruppe pro Molekül und einem Hydroxyl-Äquivalentgewicht, bezogen auf phenolische OH-Gruppen, von 100 bis 500
enthalten.

Die vorliegende Erfindung betrifft außerdem ein Verfahren zur Innenbeschichtung von Verpackungsbehältern sowie die Verwendung der Pulverlacke.

Verpackungsbehälter, wie beispielsweise Konservendosen, zwei- und dreiteilige Getränkedosen u. ä., werden innen mit einer Beschichtung versehen, um einerseits das Füllgut vor einer Beeinträchtigung durch herausgelöste Bestandteile des Metallblechs zu schützen, andererseits um eine Korrosion des Metallblechs durch aggressive Füllgüter zu vermeiden.

In der Praxis erfolgt diese Beschichtung der Verpackungsbehälter hauptsächlich mittels organisch gelöster Lacke. Dies hat jedoch eine hohe Lösemittelbelastung der Umgebung beim Trocknen der Lackfilme zur Folge. Es wird daher verstärkt versucht, diese Lacke durch lösungsmittelarme bzw. lösemittelfreie zu ersetzen. So werden beispielsweise zur Abdeckung von Dosenschweißnähten vielfach schon thermoplastische Pulverlacke eingesetzt. Diese Produkte werden durch teure Kaltvermahlung aus den entsprechenden Thermoplasten hergestellt.

Aus der EP-B-119164 sind duroplastische Pulverlacke für die Schweißnahtabdeckung von Metallbehältern, die zur Aufnahme von Lebensmitteln oder Getränken eingesetzt werden, bekannt. Diese duroplastischen Pulverlacke enthalten als Bindemittel ein Gemisch aus einem aromatischen Epoxidharz mit im Mittel maximal 2 Epoxidgruppen pro Molekül und aus einem aromatischen Epoxidharz mit im Mittel mehr als 2 Epoxidgruppen pro Molekül. Als Härter wird das Kondensationsprodukt des Diglycidylethers von Bisphenol A mit Bisphenol A mit einem auf phenolische Hydroxylgruppen bezogenen Äquivalentgewicht von 220 bis 280 oder ein saurer Polyester oder deren Mischung eingesetzt.

Diese Pulverlacke werden nur zur Schweißnahtabdeckung von Verpackungsbehältern eingesetzt. In der EP-B-119164 sind weder Hinweise enthalten, diese Pulverlacke auch für die Innenbeschichtung von Verpackungsbehältern einzusetzen, noch sind Hinweise enthalten, wie diese Pulverlacke für den Einsatz als Innenschutzlacke zu modifizieren sind. Insbesondere sind in der EP-B-119 164 keine Angaben über Teilchengrößen und Korngrößenverteilungen der Pulverlacke enthalten. Die Verwendung dieser Pulverlacke der EP-B-119 164 mit einer für Pulverlacke üblichen Korngrößenverteilung führt jedoch zu Beschichtungen, die bei den für Innenlackierungen üblichen, geringen Schichtdicken ≤ 15 µm eine zu hohe Porosität aufweisen.

Weiterhin sind aus der DE-PS 23 12 409 hitzehärtbare, lösemittelhaltige und lösemittelfreie Beschichtungsmittel für die Beschichtung von Automobilkarosserien, Maschinen, Anlagen und Behältern bekannt, die aus einem Epoxidharz mit mehr als einer 1,2-Epoxigruppe pro Molekül und einem Polyol mit mehr als einer phenolischen OH-Gruppe pro Molekül sowie weiteren üblichen Hilfs- und Zusatzstoffen bestehen.
Für die Herstellung von Automobildecküberzügen wird gemäß der DE-PS 23 12 409 ein Pulverlack mit einer Teilchengröße von höchstens 0,044 mm in einer Trockenfilmschichtdicke von 25 µm aufgebracht. Von Pulverlacken, die für die Herstellung von Innenbeschichtungen von Verpackungsbehältern geignet sind, ist weder die Teilchengröße noch die Korngrößenverteilung der Pulverlackteilchen beschrieben. Auch enthält die DE-PS 23 12 409 keinen Hinweis, daß die Teilchengröße und Korngrößenverteilung je nach Anwendungszweck der Pulverlacke gezielt einzustellen ist. Pulverlacke mit einer maximalen Teilchengröße von 44 µm und einer üblichen Korngrößenverteilung sind jedoch zur Herstellung von Innenbeschichtungen für Verpackungsbehälter mit der üblichen geringen Schichtdicke ≤ 15 µm ungeeignet, da die resultierenden Beschichtungen eine zu hohe Porosität aufweisen.

Außerdem sind aus der GB-A-2,055,843 Beschichtungsmittel auf der Basis von Epoxidharzen und phenolischen Härtern bekannt, die zur Herstellung korrosionsbeständiger Beschichtungen eingesetzt werden, wobei die Schichtdicke dieser Beschichtungen zwischen 40 und 50 µm liegt. Bezüglich der Korngrößenverteilung der Pulverlacke enthält die GB-A-2,055,843 lediglich die Angabe, daß die Teilchengröße ≦ 100 µm beträgt.

Ferner sind aus der WO87/02043 Pulverlacke auf der Basis von Epoxidharzen und phenolischen Härtern bekannt, die zur Beschichtung von Metallsubstraten, wie z. B. Automobilen, Tanks u. a. eingesetzt werden. Die Schichtdicke der Beschichtungen liegt dabei zwischen 0,15 und 0,7 mm. Doseninnenbeschichtungen sind in der WO87/02043 nicht beschrieben. Ferner enthält auch die WO87/02043 keine Angaben bezüglich der Korngrößenverteilung der eingesetzten Pulverlacke.

Weiterhin sind aus der US-PS 3,962,486 Pulverlacke für die Innenbeschichtung von Dosen bekannt, die ein Epoxidharz und einen Härter enthalten. Als typische Härter werden in der US-PS 3,962,486 katalytische Härter, aromatische Amine, Epoxy-Amin-Addukte und Säureanhydride genannt, während phenolische Härter nicht aufgeführt sind. Durch Anwendung des Plasma-Sprühbeschichtungsverfahrens sind Beschichtungen herstellbar, die bereits bei geringen Schichtdicken von weniger als 13 µm die Anforderungen erfüllen, die üblicherweise an Innenbeschichtungen von Lebensmittelverpackungen gestellt werden. Damit die Applizierbarkeit mittels des Plasma-Sprühverfahrens gewährleistet ist, dürfen nur Pulverlacke eingesetzt werden, die eine maximale Teilchengröße ≤ 100 µm sowie eine ausreichend niedrige Schmelzviskosität aufweisen. Die Korngrößenverteilung der verwendeten Pulverlacke ist jedoch in der US-PS-3,962,486 nicht näher charakterisiert.
Nachteilig bei den in der US-PS 3,962,486 beschriebenen Pulverlacken ist die durch die Verwendung aminischer Härter bedingte unzureichende Sterilisationsbeständigkeit der resultierenden Beschichtungen. Nachteilig ist ferner, daß mit Aminen gehärtete Epoxidharze zur Versprödung neigen und sehr schlechte Elastizitäten haben. Säureanhydrid-Härter weisen den Nachteil auf, daß sie stark reizend sind und daher bei der Formulierung der Pulverlacke besondere Vorsichtsmaßnahmen erforderlich sind.

Ferner sind aus der US-PS 4,183,974 Pulverlacke für die Innenbeschichtung von Dosen bekannt, die ebenfalls ein Epoxidharz und einen Aminhärter enthalten. Diese Pulverlacke weisen mittlere Teilchengrößen zwischen 1 und 100 µm, bevorzugt zwischen 1 und 10 µm auf. Die resultierenden Beschichtungen weisen zwar bereits bei Schichtdicken von ≤ 13 µm die geforderte geringe Porosität auf, jedoch ist wiederum die Sterilisationsbeständigkeit der resultierenden Beschichtungen verbesserungsbedürftig. Nachteilig ist ferner, daß mit Aminen gehärtete Epoxidharze zur Versprödung neigen und sehr schlechte Elastizitäten haben.

Schließlich sind aus der nicht vorveröffentlichten deutschen Patentanmeldung P 40 38 681.3 Pulverlacke auf der Basis von Epoxidharzen bekannt, die bei entsprechender Einstellung der Korngrößenverteilung der Pulverlackteilchen sowohl zur Innenbeschichtung von Verpackungsbehältern als auch zur Schweißnahtabdeckung geeignet sind. Als Härter enthalten diese Pulverlacke carboxylgruppenhaltige Polyester. Die Verwendung phenolischer Härter ist in dieser Patentanmeldung nicht beschrieben.

Der vorliegenden Erfindung liegt somit die Aufgabe zugrunde, Pulverlacke zur Verfügung zu stellen, die bei der Verwendung für die Innenbeschichtung von Verpackungsbehältern auch bei Applikation mit geringen Schichtdicken von ≤ 15 µm die Anforderungen erfüllen, die üblicherweise an Doseninnenbeschichtungen gestellt werden. Insbesondere sollten diese Innenbeschichtungen nicht porös sein (bestimmt mit Hilfe des sogenannten Enamelratertests), eine gute Haftung auf dem Untergrund zeigen, eine hohe Elastizität aufweisen und unter den üblichen Pasteurisations- und Sterilisationsbedingungen beständig sein. Dabei sollten die Pulverlacke während der für die Dosenbeschichtung üblichen, kurzen Trocknungszeiten aushärtbar sein.

Diese Aufgabe wird überraschenderweise durch einen Pulverlack auf der Basis von Epoxidharzen und phenolischen Härtern, insbesondere für die Innenbeschichtung von Verpackungsbehältern, gelöst, der
A) mindestens ein Epoxidharz mit einem Epoxidäquivalentgewicht von 300 bis 5500 und
B) mindestens einen Härter mit mehr als einer phenolischen Hydroxylgruppe pro Molekül und einem Hydroxyl-Äquivalentgewicht, bezogen auf phenolische OH-Gruppen, von 100 bis 500
   enthält.

Der Pulverlack ist dadurch gekennzeichnet, daß er eine derartige Korngrößenverteilung aufweist, daß
a) mindestens 90 Massenprozent der Pulverlackteilchen eine Teilchengröße zwischen 1 bis 60 µm aufweisen,
b) die maximale Teilchengröße für mindestens 99 Massenprozent der Pulverlackteilchen ≤ 100 µm beträgt,
c) die mittlere Teilchengröße der Pulverlackteilchen zwischen 5 bis 20 µm liegt und
d) die Steilheit der Kornverteilungskurve am Wendepunkt ≧ 100 ist.

Außerdem betrifft die Erfindung Verfahren zur Innenbeschichtung von Verpackungsbehältern, bei denen diese Pulverlacke appliziert werden.

Gegenstand der Erfindung ist schließlich auch die Verwendung der Pulverlacke zur Innenbeschichtung von Verpackungsbehältern.

Es ist überraschend und war nicht vorhersehbar, daß das Eigenschaftsprofil und somit der Anwendungszweck von Pulverlacken auf der Basis von Epoxidharzen und phenolischen Härtern gezielt durch Einstellung einer speziellen Korngrößenverteilung gesteuert werden kann.

Dabei sind die erfindungsgemäßen Pulverlacke schnell aushärtbar, einfach zu handhaben und einfach zu applizieren.
Außerdem zeichnen sich die erfindungsgemäßen Pulverlacke dadurch aus, daß Beschichtungen mit nur einer sehr geringen Schichtdicke von ≤ 15 µm die von den Dosenherstellern für Innenbeschichtungen geforderten Eigenschaften aufweisen. Insbesondere weisen diese Beschichtungen selbst bei einer geringen Schichtdicke von ≤ 15 µm die geforderte geringe Porosität auf. Außerdem zeichnen sich diese Beschichtungen durch eine gute Haftung, hohe Flexibilität und eine gute Pasteurisations- und Sterilisationsbeständigkeit aus.

Im folgenden sollen nun zunächst die einzelnen Komponenten der erfindungsgemäßen Pulverlacke näher erläutert werden.

Die in den erfindungsgemäßen Pulverlacken eingesetzten Epoxidharze (Komponente A) sind feste Epoxidharze mit einem Epoxidäquivalentgewicht von 300 bis 5500. Als Komponente A geeignet sind aromatische, aliphatische und/oder cycloaliphatische Epoxidharze. Bevorzugt werden aromatische Epoxidharze auf Basis Bisphenol-A und/oder Bisphenol-F und/oder Epoxidharze vom Novolak-Typ eingesetzt. Besonders bevorzugt eingesetzte Epoxidharze auf Basis Bisphenol-A oder Bisphenol-F weisen ein Epoxidäquivalentgewicht von 500 bis 2000 auf. Besonders bevorzugt eingesetzte Epoxidharze vom Novolak-Typ weisen ein Epoxidäquivalentgewicht von 500 bis 1000 auf.
Epoxidharze auf Basis Bisphenol-A bzw. Bisphenol-F weisen dabei im allgemeinen eine Funktionalität von maximal 2 und Epoxidharze vom Novolak-Typ eine Funktionali tät von im allgemeinen mindestens 2 auf. Jedoch können auch die Epoxidharze auf Basis Bisphenol-A bzw. Bisphenol-F durch Verzweigung, z.B. mittels Trimethylolpropan, Glycerin, Pentaerythrit oder anderer Verzweigungsreagenzien, auf eine Funktionalität von mehr als 2 gebracht werden.

Selbstverständlich können auch andere Epoxidharze, wie z.B. Alkylenglykoldiglycidylether oder deren verzweigte Folgeprodukte, mit Alkylenglykolen flexibilisierte Epoxidharze auf Basis Bisphenol-A bzw. -F o.ä. eingesetzt werden. Ferner sind auch Mischungen verschiedener der genannten Epoxidharze geeignet.

Geeignete Epoxidharze sind beispielsweise die unter folgendem Namen im Handel erhältlichen Produkte: Epikote^{®} 154, 1001, 1002, 1055, 1004, 1007, 1009, 3003-4F-10 der Firma Shell-Chemie, XZ 86 795 und DE^{®} 664, 667 669, 662, 642U und 672U der Firma Dow sowie Araldit^{®}, GT 6064, GT 7072, GT 7203, GT 7004, GT 7304, GT 7097 und GT 7220 der Firma Ciba Geigy.

Bevorzugt werden dabei FDA-zugelassene Epoxidharze eingesetzt.

Als Härterkomponente B geeignet sind alle festen Verbindungen mit mehr als einer phenolischen OH-Gruppe, bevorzugt 1,8 bis 4, besonders bevorzugt < 3, ganz besonders bevorzugt 1,8 bis 2,2 phenolischen OH-Gruppen pro Molekül und einem Hydroxyl-Äquivalentgewicht, bezogen auf phenolische OH-Gruppen, von 100 bis 500, bevorzugt 200 bis 300.
Bevorzugt werden als Härter solche auf Basis Bisphenol-A und/oder Bisphenol-F eingesetzt. Besonders bevorzugt wird als Härter das Kondensationsprodukt des Diglycidylethers von Bisphenol-A bzw. Bisphenol-F mit Bisphenol-A bzw. Bisphenol-F, insbesondere das Kondensationsprodukt mit einem auf phenolische Hydroxylgruppen bezogenen Äquivalentgewicht von 220 bis 280. Diese Kondensationsprodukte werden üblicherweise hergestellt durch Umsetzen von i.a. überschüssigem Bisphenol mit einem Bisphenol-Diglycidylether in Gegenwart eines geeigneten Katalysators. Bevorzugt wird das Kondensationsprodukt hergestellt durch Umsetzen des Diglycidylethers mit dem Bisphenol im Gewichtsverhältnis von 0,5 bis 2. Diese Härter auf der Basis dieser Kondensationsprodukte des Bisphenol-Diglycidylethers mit einem Bisphenol weisen im allgemeinen eine Funktionalität von maximal 2 auf, wobei durch Verwendung von Verzweigungsreagenzien wiederum höhere Funktionalitäten eingestellt werden können.
Als Härter geeignet sind ferner auch die Umsetzungsprodukte von Bisphenolen mit Epoxidharzen vom Novolak-Typ. Bevorzugt werden diese Härter durch Umsetzen des Epoxidharzes mit dem Bisphenol im Gewichtsverhältnis von 0,5 bis 2 in Gegenwart eines geeigneten Katalysators erhalten.
Geeignet sind beispielsweise die in der DE-PS-23 12 409 in Spalte 5, Zeile 2 bis Spalte 6, Zeile 55 beschriebenen phenolischen Härter. Diese Polyphenole entsprechen den folgenden allgemeinen Formeln 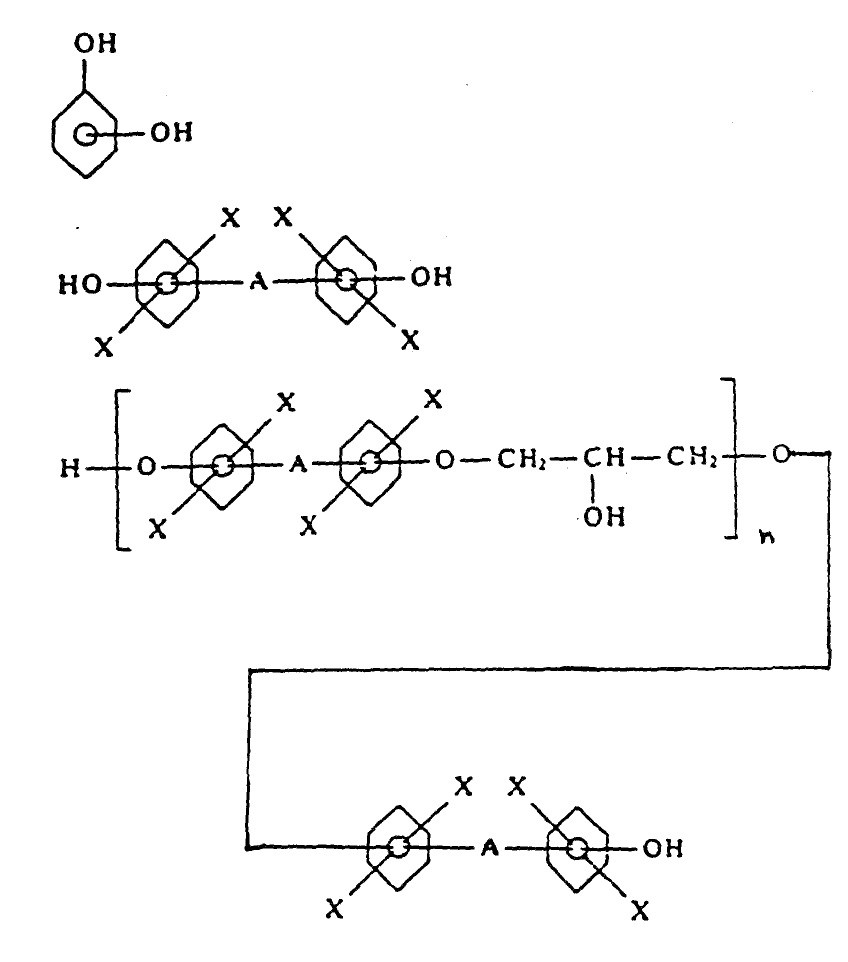 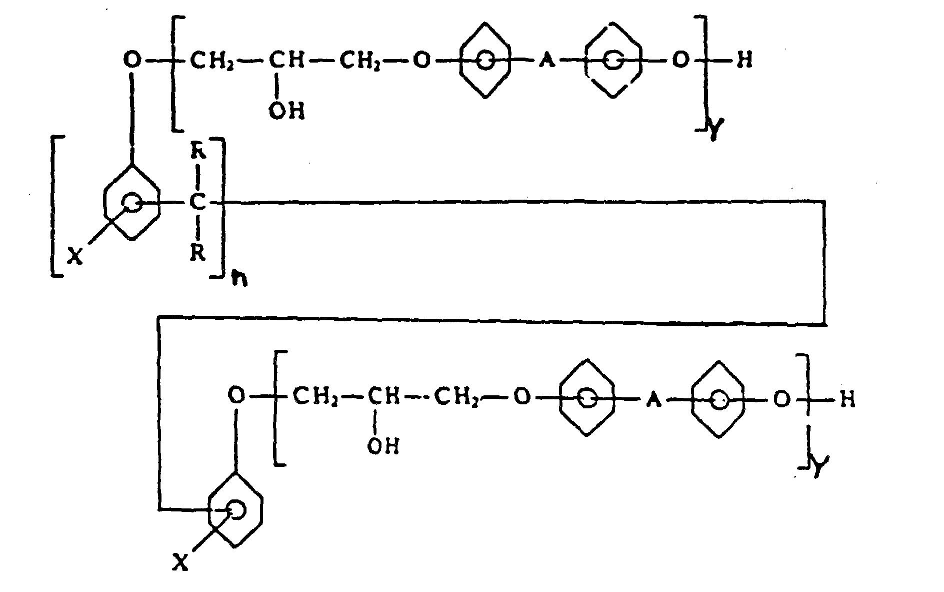 in denen
A ein zweiwertiger Kohlenwasserstoffrest mit 1 bis 6 C-Atomen oder die Reste 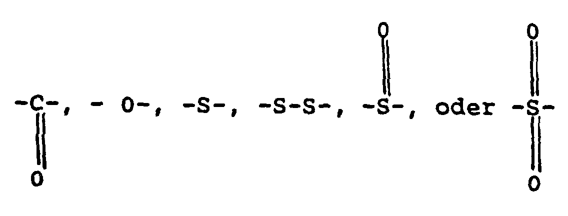
- X: ein Wasserstoff- oder ein Alkylrest mit 1 bis 4 C-Atomen ist,
- n: einen mittleren Wert von 1 bis 9, bevorzugt von 2 bis 7 und
- y: einen Wert von 0 oder 1
annimmt.

Eingesetzt werden können ferner auch die in der DE-OS 30 27 140 beschriebenen phenolischen Härter.

Selbstverständlich sind auch mit Verzweigungsreagenzien modifizierte Härter und/oder flexibilisierte Härter geeignet. Ferner können auch Mischungen von verschiedenen der genannten Härter eingesetzt werden.
Bevorzugt werden dabei FDA-zugelassene Härter eingesetzt.

Die Epoxidharzkomponente A wird in den erfindungsgemäßen Pulverlacken üblicherweise in einer Menge von 29 bis 80 Gew.-%, bevorzugt von 39 bis 60 Gew.-%, jeweils bezogen auf das Gesamtgewicht des Pulverlacks, eingesetzt.
Die Härterkomponente B wird in den erfindungsgemäßen Pulverlacken üblicherweise in einer Menge von 10 bis 50 Gew.-%, bevorzugt von 15 bis 40 Gew.-%, jeweils bezogen auf das Gesamtgewicht des Pulverlacks, eingesetzt.

Als weitere Komponente C enthalten die erfindungsgemäßen Pulverlacke mindestens einen Härtungskatalysator, üblicherweise in einer Menge von 0,01 bis 5,0 Gew.-%, bevorzugt von 0,05 bis 2,0 Gew.-%, jeweils bezogen auf das Gesamtgewicht des Pulverlacks.

Vorteilhafterweise ist der Katalyator Imidazol, 2-Methylimidazol, Ethyltriphenylphosphoniumchlorid oder ein anderes Salz desselben, ein Chinolinderivat, wie beispielsweise in der EP-B-10805 beschrieben, ein primäres, sekundäres oder tertiäres Aminophenol, Aluminiumacetylacetonat oder ein Toluolsulfonsäuresalz oder eine Mischung aus verschiedenen der genannten Katalysatoren.

Üblicherweise enthalten die im Handel erhältlichen hydroxylgruppenhaltigen Härter bereits einen Härtungskatalysator.
Beispiele für derartige handelsübliche hydroxylgruppenhaltige Härter, die bevorzugt eingesetzt werden, sind die unter den folgenden Namen im Handel erhältlichen Produkte: D.E.H.® 81, D.E.H.® 82 und D.E.H.® 84 der Firma Dow, Härter XB 3082 der Firma Ciba Geigy und Epikure® 169 und 171 der Firma Shell-Chemie.

Weiterhin können die erfindungsgemäßen Pulverlacke noch 0 bis 55 Gew.-%, bevorzugt 15 bis 25 Gew.-%, Füllstoffe enthalten (Komponente D). Bevorzugt werden FDA-zugelassene Füllstoffe eingesetzt.
Im allgemeinen werden anorganische Füllstoffe, beispielsweise Titandioxid, wie z.B. Kronos 2160 der Firma Kronos Titan, Rutil R 902 der Firma Du Pont und RC 566 der Firma Sachtleben, Bariumsulfat und Füllstoffe auf Silikat-Basis, wie z.B. Talkum, Kaolin, Magnesiumaluminiumsilikate, Glimmer u.ä. eingesetzt. Bevorzugt werden Titandioxid und Füllstoffe vom Quarzsand-Typ eingesetzt.

Außerdem können die erfindungsgemäßen Pulverlacke ggf. noch 0,01 bis 10 Gew.-%, bevorzugt 0,1 bis 2 Gew.-%, bezogen auf das Gesamtgewicht des Pulverlacks, weitere Hilfs- und Zusatzstoffe enthalten. Beispiele hierfür sind Verlaufsmittel, Rieselhilfen, Entlüftungsmittel, wie z.B. Benzoin, Pigmente o.ä.

Die Herstellung der Pulverlacke erfolqt nach den bekannten Methoden (vgl. z.B. Produktinformation der Firma BASF Lacke + Farben AG, "Pulverlacke", 1990) durch Homogenisieren und Dispergieren, beispielsweise mittels eines Extruders, Schneckenkneters, u.ä. Es ist erfindungswesentlich, daß die Pulverlacke nach ihrer Herstellung auf eine dem Anwendungszweck angepaßte Korngrößenteilung durch Vermahlen und ggf. durch Sichten und Sieben eingestellt werden.

Für die Verwendung zur Innenbeschichtung der Verpackungsbehälter wird die Korngrößenverteilung so eingestellt, daß mindestens 90 Massenprozent der Pulverlackteilchen eine Teilchengröße zwischen 1 und 60 µm aufweisen, d.h. d 90 = 1 bis 60 µm. Vorzugsweise weisen 90 Massenprozent der Pulverlackteilchen eine Teilchengröße zwischen 1 und 40 µm (d 90 = 1 bis 40 µm) und besonders bevorzugt zwischen 5 und 25 µm (d 90 = 5 bis 25 µm) auf. Die maximale Teilchengröße der Pulverlackteilchen beträgt für mindestens 99 Massenprozent der Teilchen ≤ 100 µm, bevorzugt ≤ 60 µm und besonders bevorzugt < 40 µm). Die mittlere Teilchengröße der Pulverlackteilchen liegt zwischen 5 bis 20 µm, besonders bevorzugt zwischen 5 bis 12 µm. Weiterhin ist es erfindungswesentlich, daß bei Verwendung der Pulverlacke zur Innenbeschichtung der Verpackungsbehälter die Korngrößenverteilung so eingestellt wird, daß die Steilheit S der Kornverteilungskurve im Wendepunkt ≥ 100, bevorzugt ≥ 150 und besonders bevorzugt ≥ 200 ist. Zur Erzielung von Beschichtungen mit besonders guten Eigenschaften werden ganz besonders bevorzugt Pulverlacke eingesetzt, bei denen die Steilheit S der Korngrößenverteilungskurve im Wendepunkt ≥ 300 ist.

Die Steilheit S ist dabei definiert als Grenzwert für f(x₂) - f(x₁) gegen Null von
(f(x₂) - f(x₁))/lg ((x₂/x₁)) am Wendepunkt der Kornverteilungskurve. Die Kornverteilungskurve stellt dabei die Auftragung der kumulierten Massenprozente (f(x)) gegen den absoluten Korndurchmesser (x) dar, wobei der Korndurchmesser im logarithmischen Maßstab und die kumulierten Massenprozente im linearen Maßstab dargestellt sind. Für die Verwendung als Innenbeschichtung von Verpackungsbehältern sind somit insbesondere Pulverlacke geeignet, die sowohl nur einen geringen Anteil an sehr feinen Partikeln (Teilchengröße < 5 µm) sowie gleichzeitig auch nur einen sehr geringen Anteil an grobteiligen Pulverlackpartikeln (Teilchengröße > 25 µm) aufweisen, d.h. eine möglichst enge Korngrößenverteilung aufweisen.

Die Einstellung der jeweiligen Korngrößenverteilung der Pulverlacke erfolgt mit geeigneten Mahlaggregaten, ggf. in Kombination mit geeigneten Sicht- und Siebvorrichtungen, z.B. mit Fließbettgegenstrahlmühlen (AFG) der Firma Alpine, Augsburg, in Kombination mit Turboplex-Feinstsichtern der Firma Alpine, Augsburg.

Die Verpackungsbehälter, die mit den erfindungsgemäßen Pulverlacken beschichtet werden, können aus den unterschiedlichsten Materialien bestehen, unterschiedlichste Größen und Formen aufweisen sowie nach verschiedenen Verfahren hergestellt worden sein. Insbesondere werden aber mit den erfindungsgemäßen Pulverlacken metallische Behälter beschichtet. Diese Metallbehälter können dadurch hergestellt worden sein, daß zunächst Metallblech gerollt und dann durch Umkanten verbunden wurde. An dem so entstandenen Zylinder können dann die Endstücke befestigt werden. Die erfindungsgemäßen Pulverlacke werden für die Innenbeschichtung der Dosenrümpfe, die im allgemeinen bereits einen Boden haben, eingesetzt. Ferner können auch tiefgezogene Metallbehälter innen mit den erfindungsgemäßen Pulverlacken beschichtet werden. Selbstverständlich sind die Pulverlacke aber auch für die Beschichtung von Dosendeckeln und Dosenböden geeignet.

Desweiteren können Ritzlinien an Easy-Open-Ends repariert werden.
Die Verpackungsbehälter können aus den unterschiedlichsten Materialien bestehen, wie beispielsweise Aluminium, Schwarzblech, Weißblech und verschiedene Eisenlegierungen, die ggf. mit einer Passivierungsschicht auf Basis von Nickel-, Chrom- und Zinnverbindungen versehen sind.
Behälter dieser Art werden üblicherweise als Behälter für Nahrungsmittel und Getränke verwendet, etwa für Bier, Säfte, Limonaden, Suppen, Gemüse, Fleischgerichte, Fischgerichte, Gemüse, aber auch z.B. für Tierfutter.
Die Applikation erfolgt nach bekannten Methoden, wie sie beispielsweise in der US-PS 4,183,974 beschrieben sind. Die elektrostatische Aufladung der Pulverlackteilchen erfolgt dabei durch Reibung (Triboelektrizität). Die Applikation der Pulverlackteilchen erfolgt mit Hilfe von speziellen, dem Fachmann bekannten Sprühköpfen. Selbstverständlich können die erfindungsgemäßen Pulverlacke auch nach dem bekannten Verfahren der elektrostatischen Unterstützung appliziert werden.

Für die Innenbeschichtung der Verpackungsbehälter werden die Pulverlacke üblicherweise in einer Schichtdicke ≤ 15 µm, bevorzugt von 10 bis 14 µm, aufgebracht.

Selbst bei diesen geringen Schichtdicken erfüllen die Beschichtungen die üblicherweise an derartige Filme gestellten Anforderungen. Selbstverständlich können die Pulverlacke aber auch in höheren Schichtdicken aufgebracht werden.

Der Verpackungsbehälter, dessen Innenseite mit dem erfindungsgemäßen Pulverlack versehen worden ist, wird anschließend zur Härtung des Pulverlackes einer Hitzebehandlung unterworfen. Diese Hitzebehandlung kann auf verschiedene Weise erfolgen. In der Praxis werden die Behälter hierzu häufig durch einen Durchlaufofen befördert. Die Pulverlacke härten dabei im allgemeinen bei Objekttemperaturen zwischen 230 und 350°C innerhalb einer Zeit von 5 bis 30 s vollständig aus. Dabei kann der Durchlaufofen bei konstanter Temperatur betrieben werden oder ein Temperaturprofil aufweisen, das nach den jeweiligen Gegebenheiten eingestellt wird.

Im folgenden wird nun die Erfindung anhand von Ausführungsbeispielen näher erläutert. Alle Angaben über Teile und Prozente sind dabei Gewichtsangaben, falls nicht ausdrücklich etwas anderes festgestellt wird. Die Herstellung der Pulverlacke erfolgte jeweils, indem alle Bestandteile in Kannen eingewogen, in einem Vormischer vorgemischt, mittels eines Extruders bei 60 bis 80°C homogenisiert, schnellstmöglich abgekühlt und mit Mahlaggregaten auf die gewünschte Korngrößenverteilung eingestellt wurden.

### Beispiel 1

Folgende Komponenten wurden zu dem Pulverlack 1 verarbeitet:
- 580 Teile: handelsübliches epoxidiertes Novolakharz mit einem EEW von 500 (Handelsprodukt D.E.R® 642U der Firma Dow)
- 270 Teile: handelsüblicher OH-gruppenhaltiger Härter auf Basis Bisphenol A mit einem Hydroxyläquivalentgewicht von 250 (Handelsprodukt D.E.H.® 82 der Firma Dow)
- 5 Teile: handelsübliches Verlaufsmittel auf Basis eines oligomeren Acrylats,
- 143 Teile: feinteiliger silikatischer Füllstoff vom Quarzsand-Typ und
- 2 Teile: Fluidisierhilfsmittel auf Basis pyrogener Kieselsäure oder Aluminiumoxid.

Mit Mahlaggregaten wurde die Korngrößenverteilung so eingestellt, daß mindestens 90 Massenprozent der Pulverlackpartikel eine Teilchengröße zwischen 1 und 25 µm aufweisen (d 90 = 1 bis 25 µm). Die maximale Teilchengröße beträgt für mindestens 99 Massenprozent der Teilchen ≤ 100 µm, die mittlere Teilchengröße liegt bei 9 µm. Die Steilheit S am Wendepunkt der Kornverteilungskurve beträgt 250.

Dieser Pulverlack 1 wurde auf einen Dosenrumpf (Öffnung 0 73 mm, Rumpflänge = 110 mm) mittels geeignetem Equipment appliziert, 30 s bei 280°C Objekttemperatur eingebrannt und dann einem Enamelratertest unterzogen: Die beschichtete Dose wurde in eine Cu/Cd Standardlösung S475 (Leitwert 2,2 ± 0,2 mS/cm) getaucht und als Kathode geschaltet. Während einer Zeit von 4 s wurde eine Spannung von 6,3 V angelegt und die Stromstärke gemessen. Die Stromstärke I = 1 mA wurde bereits bei einer Schichtdicke von 10 µm nicht überschritten. Außerdem wurde dieser Pulverlack 1 auf einen verzinnten Dosenrumpf (2,8 mg Auflage/m) in einer Schichtdicke von 15 µm appliziert und 30 s bei 280°C Objekttemperatur eingebrannt. Die so erhaltene Beschichtung wurde einem Sterilisationstest (30 min, 1,6 bar, 128°C) in verschiedenen Prüfmedien unterzogen. Nach der Sterilisation wurden Wasseraufnahme, (visuell) Haftung und Elastizität geprüft. Die Ergebnisse sind in der Tabelle 1 zusammengefaßt.

**Tab. 1:**

| Prüfergebnisse der Pulverlackbeschichtung 1 (Schichtdicke 15 µm, d 90 = 1 - 25 µm) | | | | | |
|---|---|---|---|---|---|
| | unbel.³⁾ | H₂0 | 3 % NaCl⁴⁾ | 3 % HAc⁵⁾ | 5 % EtOH⁶⁾ |
| H₂O-Aufnahme | - | keine | keine | keine | keine |
| Haftung¹⁾ | Gt 0 | Gt 0 | Gt 0 | Gt 1 | Gt 0 |
| T-Bend²⁾ | T0 | T0 | TO | TO | TO |
| Erläuterungen zu Tabelle 1: | | | | | |

| | | | | | |
|---|---|---|---|---|---|
| 1) Prüfung der Haftung nach der Gitterschnittmethode (DIN 53151) | | | | | |
| 2) Prüfung nach den ECCA (European Coil Coating Association)-Vorschriften | | | | | |
| 3) Untersuchung der unbelasteten Beschichtung vor der Sterilisation | | | | | |
| 4) Prüfmedium = 3 %ige wäßrige Kochsalzlösung | | | | | |
| 5) Prüfmedium = 3 %ige wäßrige Essigsäure | | | | | |
| 6) Prüfmedium = 5 %ige wäßrige Ethanollösung | | | | | |

### Vergleichsbeispiel 1

Aus den in Beispiel 1 angegebenen Komponenten wurde analog zu Beispiel 1 ein Pulverlack hergestellt. Im Unterschied zu Beispiel 1 wurde nun auf einer Sichermühle eine für Pulverlacke übliche Korngrößenverteilung eingestellt. Und zwar beträgt die maximale Teilchengröße dieses Pulverlacks 2 für mindestens 99 Massenprozent der Teilchen ≤ 100 µm. Mindestens 90 Massenprozent der Pulverlackteilchen weisen eine Teilchengröße zwischen 1 und 70 µm auf (d 90 = 1 bis 70 µm). Die mittlere Teilchengröße liegt bei 35 µm. Die Steilheit S am Wendepunkt der Kornverteilungskurve beträgt 135. Dieser Pulverlack 2 wurde mittels geeignetem Equipment in verschiedenen Schichtdicken auf einen Dosenrumpf (Öffnung 0 73 mm, Rumpflänge 110 mm) appliziert, 30 s bei 280°C Objekttemperatur eingebrannt und dann dem in Beispiel 1 beschriebenen Enamelratertest unterzogen. Es wurden folgende Ergebnisse erhalten:

| | | | | |
|---|---|---|---|---|
| Schichtdicke (µm) | 15 | 30 | 40 | 50 |
| Stromstärke I (mA) | > 100 | > 100 | 22 | < 1 |

Der Pulverlack 2 läßt sich also nicht porenfrei in den von der Verpackungsmittelindustrie geforderten dünnen Schichten applizieren. Desweiteren platzen diese hohen Pulverlackschichten im Sickenprozeß sehr schnell vom Dosenblech ab.

### Vergleichsbeispiel 2

Aus den in Beispiel 1 angegebenen Komponenten wurde analog zu Beispiel 1 ein Pulverlack hergestellt. Im Unterschied zum Beispiel 1 wurde der Pulverlack auf einer Sichtermühle so vermahlen, daß die maximale Teilchengröße dieses Pulverlacks 3 für mindestens 99 Massenprozent der Teilchen ≤ 50 µm ist (übliche Feinvermahlung). Mindestens 90 Massenprozent der Pulverlackteilchen weisen eine Teilchengröße zwischen 1 und 30 µm auf (d 90 = 1 bis 30 µm). Die mittlere Teilchengröße liegt bei 15 µm. Die Steilheit S am Wendepunkt der Kornverteilungskurve beträgt 92.

Dieser Pulverlack 3 zeigte in marktüblichen Applikationsaggregaten ein sehr schlechtes Fluidisier- und Applikationsverhalten. Eine Beschichtung von Dosenrümpfen war nur unter größten Schwierigkeiten möglich. Es traten Verstopfungen an den Pulverlackfördereinrichtungen auf. Der Pulverlack 3 neigte zu starker Agglomeratbildung, so daß die Beschichtung eine deutlich ungleichmäßige Schichtdicke aufwies. Dieser Pulverlack 3 wurde trotz dieser Schwierigkeiten in verschiedenen Schichtdicken auf einen Dosenrumpf (Öffnung 0 73 mm, Rumpflänge 110 mm) appliziert, 30 s bei 280°C Objekttemperatur eingebrannt und dann dem in Beispiel 1 beschriebenen Enamelratertest unterzogen. Es wurden folgende Ergebnisse erhalten:

| | | | | | |
|---|---|---|---|---|---|
| Schichtdicke (µm) | 15 | 20 | 25 | 35 | 45 |
| Stromstärke I (mA) | > 100 | 78 | 34 | 7 | < 1 |

Dieser Pulverlack 3 bildet also im Vergleich zum Pulverlack 2 bereits bei deutlich reduzierten Schichtdicken porenfreie Filme, jedoch liegen auch diese Schichtdicken noch deutlich oberhalb der von den Verpackungsbehälterherstellern geforderten dünnen Schichtdicke von ≤ 15 µm. Ferner weist dieser Pulverlack 3 im Gegensatz zu dem Pulverlack 1 des Beispiels 1 ein sehr schlechtes Applikationsverhalten auf.

### Vergleichsbeispiel 3

Der gemäß Vergleichsbeispiel 2 erhaltene Pulverlack 3 wurde über ein 32 µm Carbonfasersieb gesiebt. Der so erhaltene Pulverlack 4 weist eine maximale Teilchengröße für mindestens 99 Massenprozent der Teilchen von ≤ 32 µm auf. Mindestens 90 Massenprozent der Pulverlackteilchen weisen eine Teilchengröße zwischen 1 und 25 µm auf (d 90 = 1 bis 20 µm). Die mittlere Teilchengröße liegt bei 8 µm. Die Steilheit S am Wendepunkt der Kornverteilungskurve beträgt 80.
Der erhaltene Pulverlack 4 verklumpte innerhalb kürzester Zeit im Vorratsgefäß und war nicht wieder fluidisierbar, so daß keine Beschichtungen hergestellt werden konnten.

## Patentansprüche

1. Pulverlack auf der Basis von Epoxidharzen und phenolischen Härtern, insbesondere für die Innenbeschichtung von Verpackungsbehältern, der
A) mindestens ein Epoxidharz mit einem Epoxidäquivalentgewicht von 300 bis 5500 und
B) mindestens einen Härter mit mehr als einer phenolischen Hydroxylgruppe pro Molekül und einem Hydroxyl-Äquivalentgewicht, bezogen auf phenolische OH-Gruppen, von 100 bis 500
enthält, dadurch gekennzeichnet, daß der Pulverlack eine derartige Korngrößenverteilung aufweist, daß
a) mindestens 90 Massenprozent der Pulverlackteilchen eine Teilchengröße zwischen 1 und 60 µm aufweisen,
b) die maximale Teilchengröße der Pulverlackteilchen für mindestens 99 Massenprozent der Teilchen ≤ 100 µm beträgt,
c) die mittlere Teilchengröße der Pulverlackteilchen zwischen 5 und 20 µm liegt und
d) die Steilheit der Kornverteilungskurve am Wendepunkt ≥ 100 ist.

2. Pulverlack nach Anspruch 1, dadurch gekennzeichnet, daß er eine derartige Korngrößenverteilung aufweist, daß
a) mindestens 90 Massenprozent der Pulverlackteilchen eine Teilchengröße zwischen 1 und 40 µm aufweisen,
b) die maximale Teilchengröße der Pulverlackteilchen für mindestens 99 Massenprozent der Teilchen ≤ 60 µm beträgt,
c) die mittlere Teildhengröße der Pulverlackteilchen zwischen 5 und 12 µm liegt und
d) die Steilheit der Kornverteilungskurve am Wendepunkt ≥ 150 ist.

3. Pulverlack nach Anspruch 1, dadurch gekennzeichnet, daß er eine derartige Korngrößenverteilung aufweist, daß
a) mindestens 90 Massenprozent der Pulverlackteilchen eine Teilchengröße zwischen 5 und 25 µm aufweisen,
b) die maximale Teilchengröße der Pulverlackteilchen für mindestens 99 Massenprozent der Teilchen ≤ 40 µm beträgt,
c) die mittlere Teilchengröße der Pulverlackteilchen zwischen 5 und 12 µm liegt und
d) die Steilheit der Kornverteilungskurve am Wendepunkt ≥ 200 ist.

4. Pulverlack nach einem der Ansprüche 1 bis 3, dadurch gekennzeichnet, daß er als Komponente A Epoxidharze auf Basis Bisphenol-A und/oder Bisphenol-F und/oder epoxidierte Novolakharze enthält.

5. Pulverlack nach einem der Ansprüche 1 bis 4, dadurch gekennzeichnet, daß er als Komponente A Epoxidharze auf Basis Bisphenol-A und/oder Bisphenol-F mit einem Epoxidäquivalentgewicht von 500 bis 2000 und/oder Epoxidharze vom Novolak-Typ mit einem Epoxidäquivalentgewicht von 500 bis 1000 enthält.

6. Pulverlack nach einem der Ansprüche 1 bis 5, dadurch gekennzeichnet, daß er als Komponente B Härter mit einem Hydroxyl-Äquivalentgewicht, bezogen auf phenolische OH-Gruppen, von 200 bis 300 enthält.

7. Pulverlack nach einem der Ansprüche 1 bis 6, dadurch gekennzeichnet, daß er als Komponente B einen Härter mit 1,8 bis 4, bevorzugt ≤ 3 phenolischen Hydroxylgruppen pro Molekül enthält.

8. Pulverlack nach einem der Ansprüche 1 bis 7, dadurch gekennzeichnet, daß er als Komponente B einen Härter auf Basis Bisphenol-A und/oder Bisphenol-F enthält.

9. Pulverlack nach einem der Ansprüche 1 bis 8, dadurch gekennzeichnet, daß er
A) 29 bis 80 Gew.-%, bezogen auf das Gesamtgewicht des Pulverlacks, der Epoxidharzkomponente A und
B) 10 bis 50 Gew.-%, bezogen auf das Gesamtgewicht des Pulverlacks, der Härterkomponente B
enthält.

10. Verfahren zur Innenbeschichtung von Verpackungsbehältern, dadurch gekennzeichnet, daß ein Pulverlack nach einem der Ansprüche 1 bis 9 mit einer Schichtdicke ≤ 15 µm aufgebracht wird.

11. Verwendung der Pulverlacke nach einem der Ansprüche 1 bis 9 zur Innenbeschichtung von Verpackungsbehältern.

## Claims

1. Powder coating based on epoxy resins and phenolic hardeners, in particular for internal coating of packaging containers, which comprises
A) at least one epoxy resin having an epoxide equivalent weight of from 300 to 5500 and
B) at least one hardener having more than one phenolic hydroxyl group per molecule and a hydroxyl
equivalent weight, based on the phenolic OH groups, of from 100 to 500,
characterized in that the powder coating has a particle size distribution such that
a) at least 90 per cent by weight of the powder coating particles have a particle size of between 1 and 60 µm,
b) the maximum particle size of the powder coating particles is ≤ 100 µm for at least 99 per cent by weight of the particles,
c) the mean particle size of the powder coating particles is between 5 and 20 µm and
d) the gradient of the particle distribution curve at the point of inflexion is ≥ 100.

2. Powder coating according to Claim 1, characterized in that it has a particle size distribution such that
a) at least 90 per cent by weight of the powder coating particles have a particle size of between 1 and 40 µm,
b) the maximum particle size of powder coating particles is ≤ 60 µm for at least 99 per cent by weight of the particles,
c) the mean particle size of the powder coating particles is between 5 and 12 µm and
d) the gradient of the particle distribution curve at the point of inflexion is ≥ 150.

3. Powder coating according to Claim 1, characterized in that it has a particle size distribution such that
a) at least 90 per cent by weight of the powder coating particles have a particle size of between 5 and 25 µm,
b) the maximum particle size of the powder coating particles is ≤ 40 µm for at least 99 per cent by weight of the particles,
c) the mean particle size of the powder coating particles is between 5 and 12 µm and
d) the gradient of the particle distribution curve at the point of inflexion is ≥ 200.

4. Powder coating according to one of Claims 1 to 3, characterized in that it comprises, as component A, epoxy resins based on bisphenol A and/or bisphenol F and/or epoxidized novolak resins.

5. Powder coating according to one of Claims 1 to 4, characterized in that it comprises, as component A, epoxy resins based on bisphenol A and/or bisphenol F having an epoxide equivalent weight of from 500 to 2000 and/or epoxy resins of the novolak type having an epoxide equivalent weight of from 500 to 1000.

6. Powder coating according to one of Claims 1 to 5, characterized in that it comprises, as component B, a hardener having a hydroxyl equivalent weight, based on the phenolic OH groups, of from 200 to 300.

7. Powder coating according to one of Claims 1 to 6, characterized in that it comprises, as component B, a hardener having from 1.8 to 4, preferably ≤ 3, phenolic hydroxyl groups per molecule.

8. Powder coating according to one of Claims 1 to 7, characterized in that it comprises, as component B, a hardener based on bisphenol A and/or bisphenol F.

9. Powder coating according to one of Claims 1 to 8, characterized in that it comprises
A) from 29 to 80% by weight, based on the total weight of the powder coating, of epoxy resin component A and
B) from 10 to 50% by weight, based on the total weight of the powder coating, of hardener component B.

10. Process for internal coating of packaging containers, characterized in that a powder coating according to one of Claims 1 to 9 is applied in a coating thickness of ≤ 15 µm.

11. Use of powder coatings according to one of Claims 1 to 9 for internal coating of packaging containers.

## Revendications

1. Vernis en poudre à base de résines époxydes et d'agents de durcissement, en particulier pour le revêtement interne de récipients d'emballage, qui contient
(A) au moins une résine époxyde ayant un poids équivalent en époxyde de 300 à 5 500 et
(B) au moins un agent de durcissement ayant plus d'un groupement hydroxyle phénolique par molécule et un poids équivalent en hydroxyle, par rapport aux groupements OH, de 100 à 500
caractérisé en ce que le vernis en poudre présente une distribution granulométrique telle que
a) au moins 90 pour cent en masse des particules de vernis en poudre présentent une grandeur de particules comprise entre 1 et 60 µm,
b) la grandeur maximale des particules de vernis en poudre, pour au moins 99 pour cent en masse des particules, est ≤ 100 µm,
c) la grandeur moyenne des particules de vernis en poudre se situe entre 5 et 20 µm et
d) la raideur de pente de la courbe de distribution granulométrique au point d'inflexion est ≥ 100 µm.

2. Vernis en poudre selon la revendication 1, caractérisé en ce qu'il présente une distribution granulométrique telle que
a) au moins 90 pour cent en masse des particules de vernis en poudre présentent une grandeur de particules comprise entre 1 et 40 µm,
b) la grandeur maximale des particules de vernis en poudre, pour au moins 99 pour cent en masse des particules, est ≤ 60 µm,
c) la grandeur moyenne des particules de vernis en poudre se situe entre 5 et 12 µm et
d) la raideur de pente de la courbe de distribution granulométrique au point d'inflexion est ≥ 150.

3. Vernis en poudre selon la revendication 1, caractérisé en ce qu'il présente une distribution granulométrique telle que
a) au moins 90 pour cent en masse des particules de vernis en poudre présentent une grandeur de particules comprise entre 5 et 25 µm,
b) la grandeur maximale de particules de vernis en poudre, pour au moins 99 pour cent en masse des particules, est ≤ 40 µm,
c) la grandeur moyenne des particules de vernis en poudre se situe entre 5 et 12 µm et
d) la raideur de pente de la courbe de distribution granulométrique au point d'inflexion est ≥ 200.

4. Vernis en poudre selon l'une quelconque des revendications 1 à 3, caractérisé en ce qu'il contient en tant que composant (A) des résines époxydes à base de bisphénol A et/ou de bisphénol F et/ou de résines Novolaques époxydées.

5. Vernis en poudre selon l'une quelconque des revendications 1 à 4, caractérisé en ce qu'il contient en tant que composant (A) des résines époxydes à base de bisphénol A et/ou de bisphénol F ayant un poids équivalent en époxyde de 500 à 2 000 et/ou des résines époxydes du type Novolaque ayant un poids équivalent en époxyde de 500 à 1 000.

6. Vernis en poudre selon l'une quelconque des revendications 1 à 5, caractérisé en ce qu'il contient en tant que composant B des agents de durcissement ayant un poids équivalent en hydroxyle, par rapport aux groupements OH phénoliques, de 200 à 300.

7. Vernis en poudre selon l'une quelconque des revendications 1 à 6, caractérisé en ce qu'il contient en tant que composant B un agent de durcissement ayant de 1,8 à 4, de préférence ≤ 3 groupements hydroxyles phénoliques par molécule.

8. Vernis en poudre selon l'une quelconque des revendications 1 à 7, caractérisé en ce qu'il contient en tant que composant B un agent de durcissement à base de bisphénol A et/ou de bisphénol F.

9. Vernis en poudre selon l'une quelconque des revendications 1 à 8, caractérisé en ce qu'il contient
A) de 29 à 80 % en poids, par rapport au poids total du vernis en poudre, de composant de résine époxyde A et
B) de 10 à 50 % en poids, par rapport au poids total du vernis en poudre, du composant d'agent de durcissement B.

10. Procédé de revêtement interne de récipients d'emballage, caractérisé en ce que l'on procède à l'application d'un vernis en poudre selon l'une quelconque des revendications 1 à 9, ayant une épaisseur de couche ≤ 15 µm.

11. Utilisation des vernis en poudre selon l'une quelconque des revendications 1 à 9, pour le revêtement interne de récipients d'emballage.
